# EUROPÄISCHE PATENTSCHRIFT

(11) **EP 2 066 566 B1**
(45) Veröffentlichungstag und Bekanntmachung des Hinweises auf die Patenterteilung: **21.03.2012**
(21) Anmeldenummer: 07802292.8
(22) Anmeldetag: 07.09.2007
(51) Int. Cl.: B64G 1/64

(54) **TRANSPORT- UND AUSWURFEINHEIT FÜR PICOSATELLITEN**
TRANSPORTATION AND EJECTION UNIT FOR PICOSATELLITES
UNITE DE TRANSPORT ET D'EXPULSION DE PICOSATELLITES

(30) Priorität: 18.09.2006 DE 102006043660
(43) Veröffentlichungstag der Anmeldung: 10.06.2009
(73) Patentinhaber: Astro- und Feinwerktechnik Adlershof GmbH, 12489 Berlin (DE)
(72) Erfinder: DRIESCHER, Hans, 15562 Rüdersdorf (DE); BERNARD, Sebastian, 12589 Berlin (DE)
(74) Vertreter: Zucker, Volker
(86) Internationale Anmeldenummer: PCT/EP2007/007965
(87) Internationale Veröffentlichungsnummer: WO 2008/034550

(56) Entgegenhaltungen:
- EP-A- 1 013 546
- US-A1- 2005 045 771
- NASON ET AL: "CUBESAT P-Pod Deployer Requirements" INTERNET ARTICLE, [Online] 31. Mai 2002 (2002-05-31), XP002462516 Gefunden im Internet: URL:http://web.archive.org/web/20060910142 541/http://cubesat.atl.calpoly.edu/media/D ocuments/Launch+Providers/ppod_mk1_icd.pdf > [gefunden am 2007-12-14] in der Anmeldung erwähnt

## Beschreibung

Die Erfindung betrifft eine Transport- und Auswurfeinheit für Picosatelliten.

Mit der Etablierung zu einem Wirtschaftsfaktor wird den Kosten einer Raumfahrtmission immer mehr Bedeutung beigemessen. Hierbei spielen z.B. Erdbeobachtungen aus den erdnahen Umlaufbahnen (200 bis 800 km Höhe) eine größere Rolle. Um kostengünstige Alternativen zu schaffen, kristallisierte sich in den letzten Jahren eine neue Entwicklungsrichtung heraus.

Am 30. Juni 2003 wurden erstmals CubeSats erfolgreich im Orbit ausgesetzt. Entwickelt wurden diese von der California Polytechnic State University San Luis Obispo (CalPoly) und dem Stanford University's Space Systems Development Lab (SSDL). Zurzeit arbeiten weltweit ca. 40 Universitäten, High Schools und private Firmen im CubeSat-Programm.

CubeSats ermöglichen finanzierbare Raumfahrtmissionen und sind deshalb eine Nische, in der z.B. Universitätsinstitute tätig werden. Die relativ geringen Kosten der CubeSats sind auf ihre Größe zurückzuführen. Ein klassischer CubeSat ist 100 x 100 x 100 mm³ groß und wiegt nicht mehr als 1 kg. Damit gehören die CubeSats mit einer Masse von 0.1 ... 1.0 kg zur Klasse der Picosatelliten.

Trotz ihrer geringen Größe können CubeSats durchaus anspruchsvolle Aufgaben übernehmen, dazu gehören z.B. Erdbeobachtungen, Kommunikation, Navigation oder wissenschaftliche Experimente.

Zum Aussetzen von Picosatelliten in eine Umlaufbahn im Weltraum sind im Wesentlichen zwei Schritte durchzuführen:
1. Transport in die Umlaufbahn
2. Separation vom Träger
Ein Separationsmechanismus ist bekannt aus US 2005/0045771 A1, welche den nächstliegenden Stand der Technik darstellt und den Oberbegriff des Ansprunchs 1 Offenbart.

Bekannte Separationsmechanismen für Picosatelliten beruhen auf einem relativ einfachen Funktionsprinzip (Quelle: http://cubesat.atl.calpoly.edulmedia/Documents/ Launch%20Providers/ppod_mkl_icd.pdf; "CUBESAT P-Pod Deployer Requirements" vom Mai 2002). Eine vorgespannte Druckfeder fixiert den Picosatelliten während der Startphase und des Transports in den Orbit. Durch ein Signal von der Bodenstation an den Träger öffnet sich eine Klappe und der CubeSat kann durch die Druckfeder beschleunigt werden. Die Druckfeder hat im Wesentlichen zwei Funktionen, zum einen muss sie den Picosatelliten während der Phase der Startbeschleunigung sicher arretieren und zum anderen dient sie beim Aussetzen in die Umlaufbahn dazu, den Picosatelliten so zu beschleunigen, dass er eine Bahn in sicherer Entfernung von seiner Trägerrakete oder von seinem Trägersatelliten erreicht. Um den Picosatelliten während der Start-Beschleunigungsphase im Transportbehälter sicher zu arretieren, muss die Druckfeder so dimensioniert sein, dass auch bei maximalen Beschleunigungskräften ein Abheben von den den Picosatelliten aufnehmenden Unterstützungsflächen des Transportbehälters verhindert wird. Anderenfalls tritt der als "Hämmern" bezeichnete Vorgang ein, der leicht zu Funktionsausfällen im Picosatelliten führen kann.

Um die einwandfreie Arretierungsfunktion zu gewährleisten, muss die Kraft der Druckfeder sehr viel stärker sein, als das nur für die Funktion des sicheren Aussetzens des Picosatelliten erforderlich wäre. Wenn der Picosatellit beispielsweise eine Masse von einem Kilogramm hat und die Vibrationsbeschleunigungen beim Start das 15fache der Erdbeschleunigung betragen, dann müsste die Federkraft zur sicheren Arretierung ca. 150 Newton betragen. Um aber den Picosatelliten mit einer gewünschten Relativgeschwindigkeit von 0.5 bis 1 m/s vom Trägersatelliten abzusetzen, ist, abhängig vom Beschleunigungsweg, eine Ausstoßkraft von ≤ 10 Newton erforderlich.

### Die Nachteile des Standes der Technik

Bei den Transport- und Auswurfvorrichtungen gemäß dem Stand der Technik sind mehrere Nachteile festzustellen:
- Der Ausstoß des Picosatelliten erfolgt mit sehr hoher Relativgeschwindigkeit zum Träger.
- Dadurch, dass die Auswurfkraft im Allgemeinen nicht genau im Massenmittelpunkt des Picosatelliten angreift, hat dieser neben einer unerwünscht hohen Auswurfgeschwindigkeit auch einen starken Drehimpuls. Messaufgaben, bei denen eine feste Orientierung des Picosatelliten erforderlich ist, beispielsweise der Betrieb einer Erdbeobachtungskamera, sind damit erschwert oder gar nicht möglich.
- Durch den starken Ausstoßimpuls erfolgt eine unerwünschte Rückwirkung auf die Bahn des Trägers bzw. dessen Drall in den drei Freiheitsgraden der Rotation wird verändert. Bei Verwendung eines Trägersatelliten müssen dann gegebenenfalls Steuermanöver durchgeführt werden, die ihrerseits energie- und zeitaufwendig sind.

Der Erfindung liegt daher das technische Problem zugrunde, eine Transport- und Auswurfeinheit zu schaffen, mittels derer die zuvor genannten Probleme vermieden bzw. reduziert werden.

Die Lösung des technischen Problems ergibt sich durch den Gegenstand mit den Merkmalen des Anspruchs 1. Weitere vorteilhafte Ausgestaltungen der Erfindung ergeben sich aus den Unteransprüchen.

Die Transport- und Auswurfeinheit für Picosatelliten umfasst einen Behälter mit einer Klappe, mindestens eine Arretierungsfeder, mindestens eine Auswurffeder, eine Verriegelungseinrichtung der Klappe und mindestens ein Sperrmittel für die Auswurffeder, wobei bei geschlossener Klappe die Arretierungsfeder gespannt ist und durch die Verriegelungseinrichtung gesichert ist, wobei durch Lösen der Verriegelungseinrichtung die Klappe aufgeschwenkt wird und bei einer Öffnung um mehr als 90° das Sperrmittel für die Auswurffeder gelöst wird. Prinzipiell kann die Auswurffeder auch durch einen anderen Mechanismus, wie beispielsweise einen Magnetantrieb, ersetzt werden.

Die für die Arretierung des Picosatelliten notwendige starke Kraft wird beim Öffnen des Transportbehälters reduziert und führt somit nicht zu unerwünscht hohen

Rückwirkungen, weder auf den Trägersatelliten noch auf den auszustoßenden Picosatelliten.

Nach Reduzierung der Arretierungskraft erfolgt der Ausstoß des Picosatelliten mit einer definierten, relativ langsamen Geschwindigkeit und damit auch mit einem gegenüber dem bekannten Stand der Technik geringen Drall in seinen Freiheitsgraden der Rotation.

Durch die Entkopplung vom Arretierungsvorgang und Auswurf können die jeweiligen Federn voneinander unabhängig optimal an ihre Anforderungen angepasst werden.

In einer bevorzugten Ausführungsform ist die Verriegelungseinrichtung als Verschlussbügel mit einer Verschlussfeder und einer Magnethalterung ausgebildet, die vorzugsweise elektrisch betätigt wird.

In einer weiteren bevorzugten Ausführungsform ist die Auswurffeder zwischen einer Bodenplatte des Behälters und einer Schubplatte angeordnet, auf der der Picosatellit angeordnet ist.

In einer weiteren bevorzugten Ausführungsform ist eine Drehachse der Klappe mit einer Drehfeder ausgebildet, die das Aufschwenken der Klappe über die 90° unterstützt.

In einer weiteren bevorzugten Ausführungsform ist das Sperrmittel als Bolzen mit Druckfeder ausgebildet, der durch ein Langloch in einer Scheibe geführt ist, wobei die Fläche der Scheibe senkrecht zur Fläche der Klappe steht.

Die Erfindung wird nachfolgend anhand eines bevorzugten Ausführungsbeispiels näher erläutert. Die Fig. zeigen:
- Fig. 1: eine perspektivische Darstellung der Transport- und Auswurfeinheit mit entfernter vorderer Außenwand und geöffneter Klappe mit Öffnungswinkel 90° und
- Fig. 2: eine Schnittdarstellung durch ein Sperrmittel.

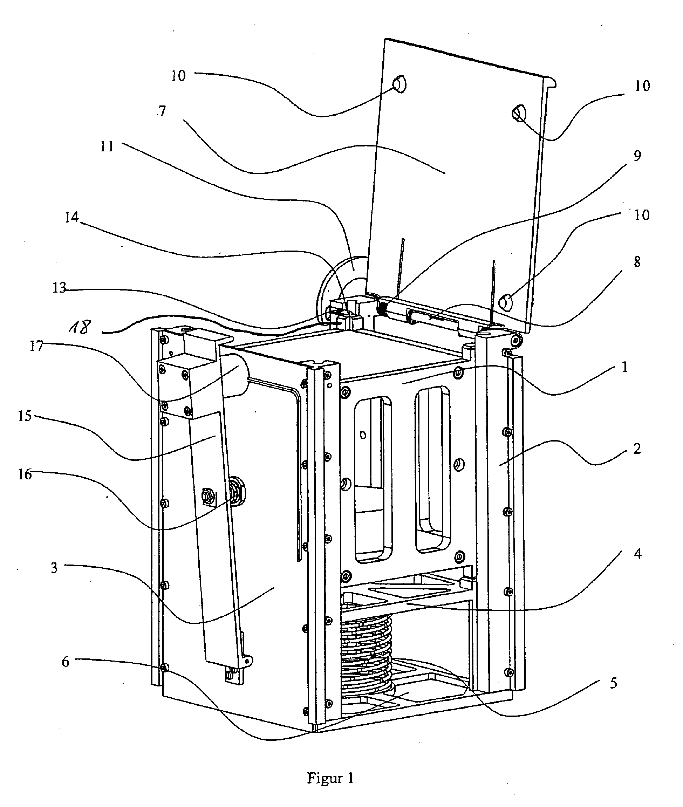

Der Transport- und Auswurfmechanismus gemäß Fig. 1 ist in seiner Grundform ein geschlossener Behälter, der der Größe des auszuwerfenden Picosatelliten 1 angepasst ist. Eine Rahmenstruktur 2 bildet mit ihren Innenflächen die Führung für den Picosatelliten 1. An den Außenflächen der Rahmenstruktur 2 sind Außenwände 3 des Transport- und Auswurfmechanismus befestigt, wobei die vordere Außenwand entfernt wurde.

Beim Einsetzen des Picosatelliten 1 in den Auswurfmechanismus wird eine Schubplatte 4, die in der Rahmenstruktur 2 geführt wird, gegen eine Auswurffeder 5 in Richtung einer Bodenplatte 6 bis zum Anschlag gedrückt. In diesem Zustand wird eine Klappe 7 um ihre Drehachse 8 gegen die Kraft einer Drehfeder 9 geschlossen.

Dabei werden kurzhubige Arretierungsfedern 10 in der Klappe 7, welche hier als federnde Druckstücke ausgeführt sind, mit großer Kraft zusammengepresst, so dass der Picosatellit 1 in der Rahmenstruktur 2 des Transport- und Auswurfmechanismus fest arretiert ist. Dabei drücken die drei Arretierungsfedern 10 auf quaderförmige Vorsprünge 18 des Picosatelliten 1.

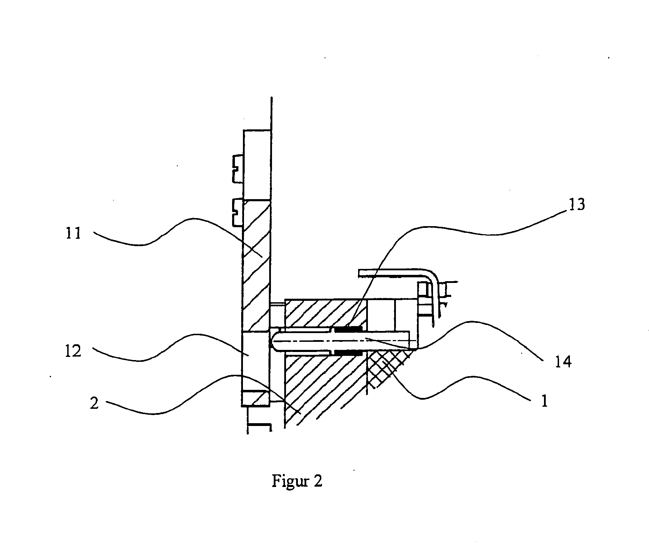

Gleichzeitig, während des Schließens der Klappe 7, die senkrecht zu ihrer Fläche eine Scheibe 11 mit einem Langloch 12 trägt, wird ein mit einer Druckfeder 13 versehener Bolzen 14 durch das Langloch 12 eingeschoben (siehe Fig. 2). Der Bolzen 14 liegt dann auf einem der quaderförmigen Vorsprünge 18 auf. Abschließend wird die Klappe 7 über den Verschlussbügel 15 mit der Verschlussfeder 16 mit Hilfe der elektrisch zu betätigenden Magnethalterung 17 endgültig verriegelt.

In diesem Zustand kann der in der Transport- und Auswurfvorrichtung arretierte Picosatellit mit Hilfe einer Trägerrakete in die vorgesehene Umlaufbahn transportiert werden.

Der Auswurf erfolgt dann durch das Funksignal einer Bodenstation, wodurch die Magnethalterung 17 entriegelt und die Verschlussfeder 16 den Verschlussbügel 15 von der Klappe 7 entfernt. Die kurzhubigen Arretierungsfedern 10 geben nun der Klappe 7 einen starken Drehimpuls, so dass diese aufspringt und von der Drehfeder 9 endgültig geöffnet wird.

Während sich die Klappe 7 öffnet, ist der Picosatellit 1 durch den Bolzen 14 noch solange festgehalten, bis sich die Klappe 7 mehr als 90° geöffnet hat. In dieser Winkelstellung gibt das Langloch 12 in der Scheibe 11 den Bolzen 14 frei. In diesem Zustand wirft die von der Auswurffeder 5 angetriebene Schubplatte 4 den Picosatelliten 1 aus der Transport- und Auswurfeinheit aus.

Im dargestellten Ausführungsbeispiel erfolgt die Entsperrung des Bolzens 14 automatisch, wenn die Klappe 7 einen Öffnungswinkel größer 90° aufweist. Es sind jedoch Anwendungen denkbar, wo der Bolzen 14 oder ein alternatives Sperrmittel erst über ein zusätzliches elektrisches Signal entsperrt werden.

## Patentansprüche

1. Transport- und Auswurfeinheit für Picosatelliten, umfassend einen Behälter mit einer Klappe (7), mindestens eine Auswurffeder (5), eine Verriegelungseinrichtung der Klappe (7) und mindestens ein Sperrmittel für die Auswurffeder, **dadurch gekennzeichnet, dass** genannte Transport- und Auswurfeinheit mindestens eine Arretierungsfeder (10) umfasst, wobei bei geschlossener Klappe (7) die Arretierungsfeder gespannt ist und durch die Verriegelungseinrichtung gesichert ist, wobei durch Lösen der Verriegelungseinrichtung die Klappe (7) aufgeschwenkt wird und bei einer Öffnung um mehr als 90° das Sperrmittel für die Auswurffeder (5) gelöst wird.

2. Transport- und Auswurfeinheit nach Anspruch 1, **dadurch gekennzeichnet, dass** die Verriegelungseinrichtung als Verschlussbügel (15) mit einer Verschlussfeder (16) und einer Magnethalterung (17) ausgebildet ist.

3. Transport- und Auswurfeinheit nach Anspruch 2, **dadurch gekennzeichnet, dass** die Magnethalterung (17) elektrisch betätigt wird.

4. Transport- und Auswurfeinheit nach einem der Ansprüche 1 bis 3, **dadurch gekennzeichnet, dass** die Auswurffeder (5) zwischen einer Bodenplatte (6) des Behälters und einer Schubplatte (4) angeordnet ist, auf der der Picosatellit angeordnet ist.

5. Transport- und Auswurfeinheit nach einem der Ansprüche 1 bis 4, **dadurch gekennzeichnet, dass** eine Drehachse (8) der Klappe (7) mit einer Drehfeder (9) ausgebildet ist.

6. Transport- und Auswurfeinheit nach einem der Ansprüche 1 bis 5, **dadurch gekennzeichnet, dass** das Sperrmittel als Bolzen (14) mit Druckfeder (13) ausgebildet ist, der durch ein Langloch (12) in eine Scheibe (11) geführt ist, wobei die Fläche der Scheibe (11) senkrecht zur Fläche der Klappe (7) steht.

## Claims

1. Transport and ejection unit for picosatellites, comprising a container having a flap (7), at least one ejection spring (5), a locking device for the flap (7) and at least one blocking means for the ejection spring, **characterized in that** said transport and ejection unit comprises at least one locking spring (10), with the locking spring being loaded and being secured by the locking device when the flap (7) is closed, with the flap (7) being pivoted open by releasing the locking device, and with the blocking means for the ejection spring (5) being released on opening through more than 90°.

2. Transport and ejection unit according to Claim 1, **characterized in that** the locking device is in the form of a padlock (15) with a closing spring (16) and a magnet holder (17).

3. Transport and ejection unit according to Claim 2, **characterized in that** the magnet holder (17) is operated electrically.

4. Transport and ejection unit according to one of Claims 1 to 3, **characterized in that** the ejection spring (5) is arranged between a baseplate (6) of the container and a thrust plate (4) on which the picosatellite is arranged.

5. Transport and ejection unit according to one of Claims 1 to 4, **characterized in that** a rotating shaft (8) of the flap (7) is formed with a rotating spring (9).

6. Transport and ejection unit according to one of Claims 1 to 5, **characterized in that** the blocking means is in the form of a bolt (14) with a compression spring (13), which is guided through an elongated hole (12) into a disc (11), with the surface of the disc (11) being at right angles to the surface of the flap (7).

## Revendications

1. Unité de transport et d'expulsion pour picosatellites, comprenant un réceptacle doté d'un clapet (7), au moins un ressort d'expulsion (5), un dispositif de verrouillage du clapet (7) et au moins un moyen de blocage du ressort d'expulsion,
**caractérisée en ce que**
ladite unité de transport et d'expulsion présente au moins un ressort de blocage (10),
**en ce que** lorsque le clapet (7) est fermé, le ressort de blocage est serré et est bloqué par le dispositif de verrouillage et
**en ce que** par libération du dispositif de verrouillage, le clapet (7) bascule vers le haut et le moyen de blocage du ressort d'expulsion (5) est libéré lorsque l'ouverture dépasse 90°.

2. Unité de transport et d'expulsion selon la revendication 1, **caractérisée en ce que** le dispositif de verrouillage est configuré comme étrier de fermeture (15) doté d'un ressort de fermeture (16) et d'un dispositif magnétique de retenue (17).

3. Unité de transport et d'expulsion selon la revendication 2, **caractérisée en ce que** le dispositif magnétique de retenue (17) est actionné électriquement.

4. Unité de transport et d'expulsion selon l'une des revendications 1 à 3, **caractérisée en ce que** le ressort d'expulsion (5) est disposé entre une plaque de fond (6) du réceptacle et une plaque coulissante (4) sur laquelle le pico-satellite est disposé.

5. Unité de transport et d'expulsion selon l'une des revendications 1 à 4, **caractérisée en ce qu'**un axe de rotation (8) du clapet (7) est configuré avec un ressort rotatif (9).

6. Unité de transport et d'expulsion selon l'une des revendications 1 à 5, **caractérisée en ce que** le moyen de blocage est configuré comme goujon (14) doté d'un ressort de poussée (13) et guidé dans un trou oblong (12) d'un disque (11), la surface du disque (11) étant perpendiculaire à la surface du clapet (7).
